# EUROPÄISCHE PATENTSCHRIFT

(11) **EP 3 831 456 B1**
(45) Veröffentlichungstag und Bekanntmachung des Hinweises auf die Patenterteilung: **13.08.2025**
(21) Anmeldenummer: 20196186.9
(22) Anmeldetag: 15.09.2020
(51) Int. Cl.: C02F 1/02, B01D 1/00, B01D 1/02, B01D 3/00, B01D 3/42, C02F 103/04

(54) **VORRICHTUNG ZUR HERSTELLUNG UND BEREITSTELLUNG VON STERILWASSER UND VERFAHREN ZUM BETREIBEN DER VORRICHTUNG**
DEVICE FOR MAKING AND PROVIDING STERILE WATER AND METHOD FOR OPERATING THE DEVICE
DISPOSITIF DE FABRICATION ET DE FOURNITURE D'EAU STÉRILE ET PROCÉDÉ DE FONCTIONNEMENT DU DISPOSITIF

(30) Priorität: 05.12.2019 DE 102019133122
(43) Veröffentlichungstag der Anmeldung: 09.06.2021
(73) Patentinhaber: Krones AG, 93073 Neutraubling (DE)
(72) Erfinder: VOGELSANG, Christian, 93073 Neutraubling (DE)
(74) Vertreter: Grünecker Patent- und Rechtsanwälte PartG mbB

(56) Entgegenhaltungen:
- EP-A1- 1 106 083
- WO-A1-93/05667
- AU-B2- 768 250

## Beschreibung

Die Erfindung betrifft eine Vorrichtung zur Herstellung und Bereitstellung von Sterilwasser gemäß dem Oberbegriff des Anspruchs 1 und ein Verfahren zum Betreiben der Vorrichtung gemäß dem Anspruch 9.

### Stand der Technik

Für den Betrieb von Anlagen mit aseptischem Anspruch kann steriles Wasser notwendig sein. Dieses sterile Wasser wird zum Reinigen von Anlagenteilen, zum Reinigen von Packstoffen, zur Nasshaltung oder zur Kühlung verwendet. Beispiele bei einer aseptischen Füllmaschine sind die Innenreinigung einer Füllmaschine bei einem Sortenwechsel, die Gewindeabspritzung nach dem Füllvorgang, Schmierung von Bauteilen oder Behältern im Flaschenlauf und das Abkühlen des Füllprodukttanks nach der Sterilisation.

Das sterile Wasser wird über eine Sterilwasser-UHT erzeugt, die das zunächst unsterile Wasser erhitzt und eine definierte Zeit konstant heiß hält. Dadurch erfährt das Wasser eine Pasteurisierung, die bei Einhaltung einer Mindesttemperatur und Heißhaltezeit dieses Wasser zum sterilen Wasser definiert.

Bekannt ist, dass das im Kreislauf befindliche Wasser mit einem Nennvolumenstrom pasteurisiert und anschließend über eine Rekuperations- und Kühlstufe auf Normal- oder Betriebstemperatur gekühlt wird. Ab hier kann das Wasser zu den Verbrauchern abgezweigt werden. Wird dem System weniger Wasser als der Nennvolumenstrom entnommen, wird dies dem Kreislaufsystem zurückgeführt und erneut erhitzt werden.

Bei diesem Verfahren treten Energieverluste auf, die im Stand-by- oder Teillastbetrieb auftreten. Die Energieverluste entstehen durch den Wirkungsgrad der Rekuperation, der in der technischen Praxis bei 90 % liegt. Dieser Verlust muss zum einen über die Energiezufuhr in das noch unsterilen Wassers nach seiner Rekuperation ausgeglichen werden. Zum anderen muss das rekuperierte sterile Wasser im gleichen Maße zusätzlich gekühlt werden. D.h., dass all das Wasser, das nicht verbraucht wird, kontinuierlich um den Rekuperationsverlust erhitzt wird, um dann wieder um den gleichen Betrag gekühlt zu werden. Dies ist ein technisch vermeidbarer Energieverlust.

US 4 416 194 offenbart eine Zubereitungsvorrichtung für Erfrischungsgetränke. Ein Getränk wird durch eine Leitung zu und durch einen Wärmerückgewinnungsregenerator geleitet und nimmt dabei Wärme von einem im Gegenstrom geleiteten, bereits pasteurisierten Getränk auf. Das vorgewärmte Getränk wird zu und durch einen Hauptgetränkeerhitzer geleitet, nimmt dabei Wärme von einer im Gegenstrom geleiteten, heißen Flüssigkeit auf und wird durch eine Heißhaltestrecke geleitet, um pasteurisiert zu werden. Das pasteurisierte Getränk gelangt dann zu dem Wärmerückgewinnungsregenerator und von dort in eine Vorrichtung zum Abkühlen und zum Versetzen mit Kohlensäure. Am Ende der Heißhaltestrecke ist ein erster Temperatursensor vorgesehen, um zu überprüfen, ob die Temperatur des Getränks ausreichend hoch ist. Ist dies nicht der Fall, so wird das Produkt mittels eines Umleitungsventils zurück zu dem Hauptgetränkeerhitzer geleitet. Am Ende der Heißhaltestrecke ist zudem ein zweiter Temperatursensor vorgesehen, um zu überprüfen, ob die Temperatur des Getränks zu hoch ist. Ist dies der Fall, so kann der heißen Flüssigkeit kalte Flüssigkeit zugeführt werden, so dass in weiteren Umläufen das Produkt nicht zu hoch erhitzt wird.

DE 693 11 389 T2 offenbart ein Verfahren und eine Vorrichtung zur Wärmebehandlung eines flüssigen Produkts. Die Vorrichtung umfasst einen Vorratsbehälter, der über Primärleitungen eines Regenerators nacheinander mit einer Pumpe, einem Pasteurisiergerät, einem Temperaturhalteelement und einem Vielwegeventil verbunden ist, welche mittels Rohre in Reihe geschaltet sind. Das Vielwegeventil ist in einer ersten Position mit einer Sekundärleitung des dem Pasteurisiergerät vorgeschalteten Regenerators und in einer zweiten Position mit einem Pumpeneinlass in Verbindung. Zudem ist eine dem Vorratsbehälter unmittelbar nachgeschaltete Produktzuführpumpe vorgesehen. Weiter umfasst die Vorrichtung sowohl an der ersten als auch an der zweiten Position des Vielwegeventils Mittel zum Aufrechterhalten eines positiven Druckunterschieds zwischen den sekundären und den primären Leitungen des Regenerators.

Dokument WO 93/056667 offenbart eine Vorrichtung geeignet zur Herstellung und Bereitstellung von Sterilwasser.

### Aufgabe

Der vorliegenden Erfindung liegt daher die Aufgabe zugrunde, eine Vorrichtung zur Herstellung und Bereitstellung von Sterilwasser und ein Verfahren zum Betreiben der Anlage bereitzustellen, die ein energieffizientes und sicheres Herstellen und Bereitstellen von Sterilwasser ermöglichen.

### Lösung

Diese Aufgabe wird gelöst mit der Vorrichtung nach Anspruch 1 und dem Verfahren nach Anspruch 9. Weitere Ausführungsformen sind in den Unteransprüchen offenbart.

Die erfindungsgemäße Vorrichtung zur Herstellung und Bereitstellung von Sterilwasser umfasst einen Einlass für Prozesswasser, einen dem Einlass nachfolgenden Rekuperator zur Vorerwämung von Prozesswasser mittels im Gegenstrom fließenden Sterilwassers und zum Abkühlen des Sterilwassers mittels des im Gegenstrom fließenden Prozesswassers und einen dem Rekuperator nachfolgenden Heizkreislauf mit einer Pumpe, einem Erhitzer zum Erhitzen von vorerwärmten Prozesswasser und einer Heißhaltestrecke zum Heißhalten von erhitztem Prozesswasser für eine vorgegebene Zeitdauer mit einer vorgegebenen Temperatur zur Herstellung von Sterilwasser. Weiter umfasst die Vorrichtung einen der Heißhaltestrecke nachfolgenden Temperatursensor zum Messen einer aktuellen Temperatur des die Heißhaltestrecke verlassenden Sterilwassers und ein dem Temperatursensor nachfolgendes Durchflussregelventil, einen Bypass, der zwischen dem Durchflussregelventil und dem Erhitzer vorgesehen ist. Das Durchflussregelventil ist ausgebildet, einen Volumenstrom in dem Heizkreislauf konstant zu halten, wobei der Rekuperator ausgebildet ist, bei Abnahme eines ersten Teilvolumenstroms von Sterilwasser aus dem Heizkreislauf, das Sterilwasser des ersten Teilvolumenstroms abzukühlen, wobei der Bypass ausgebildet ist, einen zweiten Teilvolumenstrom von Sterilwasser, der einer Differenz zwischen dem Volumenstrom und dem ersten Teilvolumenstrom entspricht, in den Heizkreislauf zurückzuleiten, wodurch ein Abkühlen des Sterilwassers des zweiten Teilvolumenstroms vermieden wird, wobei der Heizkreislauf ohne Rekuperations- oder Kühlstufe aufgebaut ist.

Das Prozesswasser kann unsteriles Wasser sein. Das Prozesswasser kann auch Anteile von Sterilwasser umfassen. Das Prozesswasser kann durch eine Sterilisierung in Sterilwasser umgewandelt werden. Prozesswasser kann in die Vorrichtung in der Menge eingebracht werden, in der Sterilwasser verbraucht wird. Beispielsweise kann das Prozesswasser mit einer Temperatur zwischen 10°C und 35°C und einem Volumenstrom bis zu 15 m³/h eingebracht werden.

Der Heizkreislauf kann mit einem Volumenstrom, auch Nennvolumenstrom genannt, betrieben werden. Der Volumenstrom im Heizkreislauf kann 7,5 m³/h bis 15 m³/h betragen.

Im gleichen Maße wie Sterilwasser aus dem Heizkreislauf, z.B. durch einen oder mehrere Verbraucher abgenommen wird, kann Prozesswasser dem Heizkreislauf zugeführt werden.

Die Heißhaltestrecke kann eine Länge von 25 m aufweisen, und ein Druck in der Heißhaltestrecke kann 5 bar bei einer Prozesswassertemperatur von maximal 156°C betragen. Die vorgegebene Zeitdauer kann 2 min betragen.

Nach dem Durchflussregelventil kann ein Druck von 3,5 bar bei einer Abnahme von Sterilwasser bzw. ein Druck von 4,0 bar ohne eine Abnahme von Sterilwasser vorliegen und das Sterilwasser kann eine Temperatur von 135°C aufweisen. Der Kv-Wert des Durchflussregelventils kann bei einer Abnahme von Sterilwasser 12 bzw. bei keiner Abnahme von Sterilwasser 7,5 betragen.

Nachdem Sterilwasser, z.B. mit dem ersten Teilvolumenstrom, den Rekuperator verlassen hat, kann es eine Temperatur von 40°C aufweisen.

In der Vorrichtung braucht kein Puffertank für das Sterilwasser vorgesehen werden.

Durch das Vorsehen des Bypasses und dadurch, dass in dem Heizkreislauf ohne Rekuperations- oder Kühlstufe aufgebaut ist, wird bei einer Abnahme eines ersten Teilvolumenstroms nur das Sterilwasser des ersten Teilvolumenstroms rekuperiert und das restliche Sterilwasser, d.h. das Sterilwasser im zweiten Teilvolumenstrom wird über den Bypass in den Heizkreislauf zurückgeleitet. Daher wird ein unnötiges Abkühlen des Sterilwassers des zweiten Teilvolumenstroms vermieden.

Weiter kann die Vorrichtung einen dem Rekuperator nachfolgenden Kühler zum Abkühlen von Sterilwasser, das z.B. von einem oder mehreren Verbrauchern abgenommen wird, umfassen. Eine weitere Kühlung des Sterilwassers mittels des Kühlers kann erforderlich sein für die Produktion von karbonisierten Produkten zur Kühlung eines Füllerkessels. Nach dem Kühler kann ein Druck von 3,5 bar vorliegen.

Weiter kann die Vorrichtung einen oder mehrere Verbraucher zum Verbrauchen von abgekühltem Sterilwasser umfassen. Das Sterilwasser kann durch den Rekuperator oder durch den Rekuperator und den Kühler abgekühlt worden sein. Das Sterilwasser kann dem oder den Verbrauchern auch lediglich zur Verfügung gestellt werden; z.B. ohne dass der eine oder die mehreren Verbraucher Teil der Vorrichtung sind.

Das Sterilwasser kann beispielsweise verwendet werden zum Abspritzen von Gewinden von höhenverstellbaren Führungsgarnituren, wie beispielsweise in der EP 2 700 613 A1 offenbart, zum Spülen von Füllerkesseln, beispielsweise bei einem Produktwechsel und/oder nach einer heißen CIP, zum Spülen und Kühlen von warmen/heißen Anlagenteilen beispielsweise einer Abfüllanlage und/oder Pasteurisieranlage, zum Abspritzen von Füllern einer Getränkeabfüllanlage und/oder zum Befüllen von Wasserschlössern in der Asepktik. Andere Verwendungsmöglichkeiten des Sterilwassers sind möglich.

Weiter kann die Vorrichtung eine dem oder den Verbrauchern nachfolgende Leitung, die für eine Leitungssanitisierung geöffnet werden kann, umfassen.

In dieser Leitung kann eine endständige Dampfsperre vorgesehen sein. Bis zu dem Druckhalteventil kann der Druck 3,5 bar betragen.

Der Pumpe nachfolgend und vor dem Erhitzer kann ein Überströmventil vorgesehen sein. Ein Druck nach dem Überströmventil kann 3 bar bei einer Prozesswassertemperatur von maximal 140°C betragen. Eine Überwachung der Sterilitätsgrenze kann durch eine Druckdifferenz über dem Überströmventil erfolgen. Die Druckdifferenz kann 0,5 bar betragen.

In dem Bypass kann ein Druckhalteventil vorgesehen sein. Bei dem Druckhalteventil des Bypasses kann ein Druckunterschied von 0,5 bar vorgesehen sein.

Der Heizkreislauf kann weiter ein Entgasungs- und Ausdehnungsgefäß umfassen. In dem Entgasungs- und Ausdehnungsgefäß kann ein Druck von 3 bar vorliegen.

Ein Verfahren zum Betreiben einer Vorrichtung wie oben oder weiter unten beschrieben umfasst die folgenden Schritte:
- Zuführen von Prozesswasser zu der Vorrichtung durch einen Einlass der Vorrichtung,
- Vorerwärmen des Prozesswassers in einem Rekuperator der Vorrichtung mittels im Gegenstrom fließenden Sterilwassers,
- Erhitzen des vorerwärmten Prozesswassers in einem Erhitzer der Vorrichtung,
- Heißhalten des erhitzen Prozesswassers in einer Heißhaltestrecke der Vorrichtung für eine vorgegebene Zeitdauer mit einer vorgegebenen Temperatur zur Herstellung des Sterilwassers,
- Regeln eines konstanten Volumenstroms in einem Heizkreislauf der Vorrichtung mittels eines Durchflussregelventils der Vorrichtung, um eine Heißhaltezeit im Heizkreislauf konstant zu halten,
- erstes Abkühlen eines ersten Teilvolumenstroms von Sterilwasser, der aus dem Heizkreislauf abgenommen wird, in dem Rekuperator und
- Zurückleiten eines zweiten Teilvolumenstroms von Sterilwasser, der einer Differenz zwischen dem Volumenstrom und dem ersten Teilvolumenstrom entspricht, über einen Bypass der Vorrichtung in den Heizkreislauf.

Das Verfahren kann weiter den Schritt eines zweiten Abkühlens des Sterilwassers in einem Kühler der Vorrichtung umfassen.

Das Verfahren kann weiter den Schritt eines Leitens des abgekühlten Sterilwassers zu einem Verbraucher oder mehreren Verbrauchern umfassen. Das abgekühlte Sterilwasser kann durch das erste Abkühlen oder durch das erste und zweite Abkühlen abgekühlt worden sein.

Bei dem Druckhalteventil kann ein Druckunterschied von 0,5 bar vorgesehen sein.

Nach dem Durchflussregelventil kann ein Druck von 3,5 bar bei einer Abnahme von Sterilwasser oder ein Druck von 4,0 bar ohne eine Abnahme von Sterilwasser vorgesehen sein.

### Kurze Figurenbeschreibung

Weitere Vorteile und Merkmale der vorliegenden Erfindung ergeben sich aus der nachfolgenden Beschreibung von Ausführungsbeispielen sowie anhand der Figuren. Hierbei zeigt:
Figur 1 eine schematische Ansicht einer Vorrichtung zur Herstellung von Sterilwasser,
Figur 2 ein Flussdiagramm eines Verfahrens zum Betreiben der Vorrichtung zur Herstellung und Bereitstellung von Sterilwasser.

### Ausführliche Beschreibung

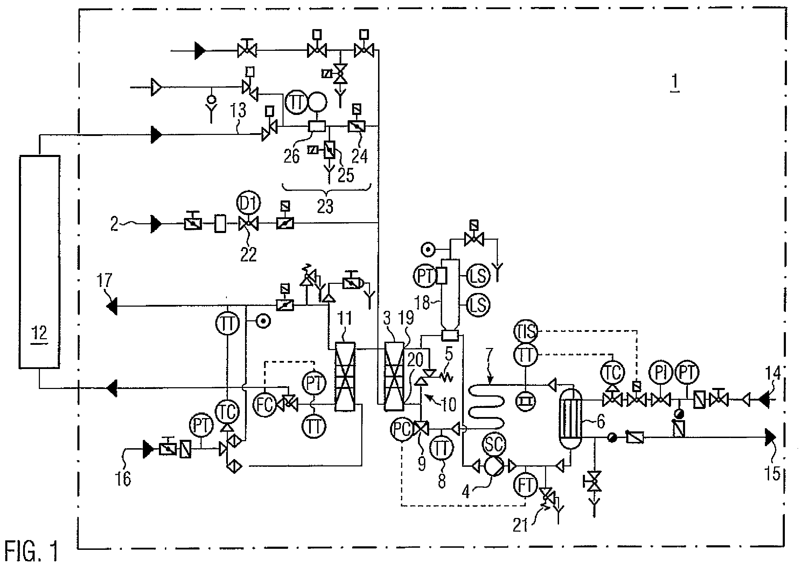

Die Figur 1 zeigt eine schematische Ansicht einer Vorrichtung 1 zur Herstellung von Sterilwasser, deren Elemente in der Darstellung in dem strichpunktierten Bereich zu sehen sind. Der Verbraucher 12 muss nicht von der Vorrichtung 1 umfasst sein, optional kann der Verbraucher 12 aber auch von der Vorrichtung 1 umfasst sein. Durch einen ersten Einlass 2 kann Prozesswasser in eine Leitung mit einem Druckminderer 22 eingebracht werden, durch die das Prozesswasser zu und durch einen Rekuperator 3 geleitet werden kann. Beispielsweise kann das Prozesswasser mit einer Temperatur zwischen 10°C und 35°C und einem Volumenstrom von bis zu 15 m³/h eingebracht werden. In dem Rekuperator 3 kann eine Vorerwärmung des Prozesswassers mittels im Gegenstrom fließendes heißes Sterilwasser erfolgen. Von dem Rekuperator 3 kann das vorerwärmte Prozesswasser mittels einer Pumpe 4 durch einen Heizkreislauf gepumpt werden, um dort sterilisiert zu werden. Ein Nennvolumenstrom im Heizkreislauf kann 7,5 m³/h bis 15 m³/h betragen.

Das vorerwärmte Prozesswasser kann an einem Entgasungs- und Ausdehnungsgefäß 18 vorbei und/oder durch das Entgasungs- und Ausdehnungsgefäß 18 hindurch zu und durch die Pumpe 4 und zu und durch einen Erhitzer 6 geleitet werden. In dem Entgasungs- und Ausdehnungsgefäß 18 kann ein Druck von 3 bar vorliegen. Nach der Pumpe 4 und vor dem Erhitzer 6 ist ein Überströmventil 21 vorgesehen. Der Druck nach dem Überströmventil 21 kann 3 bar bei einer Prozesswassertemperatur von maximal 140°C betragen. Eine Überwachung der Sterilitätsgrenze kann durch eine Druckdifferenz über dem Überströmventil 21 erfolgen. Die Druckdifferenz kann 0,5 bar betragen.

In dem Erhitzer 6 kann das vorerwärmte Prozesswasser im Gegenstrom zu Dampf erhitzt werden. Nach dem Erhitzer 6 kann das erhitzte Prozesswasser zu und durch eine Heißhaltestrecke 7 geleitet werden, in der das erhitze Prozesswasser für eine vorgegebene Zeitdauer auf einer vorgegebenen Temperatur gehalten werden kann, um letztendlich sterilisiert zu werden. Die Heißhaltestrecke 7 kann eine Länge von 25 m aufweisen, und ein Druck in der Heißhaltestrecke 7 kann 5 bar bei einer Prozesswassertemperatur von maximal 156°C betragen. Die vorgegebene Zeitdauer kann 2 min betragen.

Nach der Heißhaltestrecke 7 ist ein Temperatursensor 8 angeordnet, um die aktuelle Temperatur des Sterilwassers nach der Heißhaltestrecke 7 zu messen.

Optional kann ermittelt werden, ob die aktuelle Temperatur eine Vorgabe erfüllt, z.B. ob die aktuelle Temperatur einer vorgegebenen Temperatur entspricht und/oder in einem vorgegebenen Temperaturbereich liegt. Ist dies der Fall, so kann davon ausgegangen werden, dass im Heizkreislauf Sterilwasser hergestellt wurde.

Wird Sterilwasser benötigt, beispielsweise von einem oder mehreren Verbrauchern, so kann aus einem Sterilwassersystem, das dem Durchflussregelventil 9 nachfolgend ist, ein erforderlicher Teilvolumenstrom abgezogen werden. Das Sterilwasser wird dabei durch einen ersten Eingang 20 durch den Rekuperator 3 geleitet, wo es abgekühlt wird. Wird kein Sterilwasser benötigt, so wird das Sterilwasser über einen Bypass 10 durch das Druckhalteventil 5 zurück zu und durch den Erhitzer 6 geleitet.

Nach dem Durchflussregelventil 9 kann ein Druck von 3,5 bar bei einer Abnahme von Sterilwasser bzw. ein Druck von 4,0 bar ohne eine Abnahme von Sterilwasser vorliegen und das Sterilwasser kann eine Temperatur von 135°C aufweisen. Der Kv-Wert des Durchflussregelventils 9 kann bei einer Abnahme von Sterilwasser 12 bzw. bei keiner Abnahme von Sterilwasser 7,5 betragen.

Nachdem das Sterilwasser den Rekuperator 3 verlassen hat, kann es eine Temperatur von 40°C aufweisen und zu und durch einen Kühler 11 geleitet werden, in dem das Sterilwasser mittels im Gegenstrom fließendes Eiswasser oder andersartiges Kühlwasser, z.B. Kühlturmwasser, weiter abgekühlt werden kann. Eine Kühlung des Sterilwassers mittels des Kühlers 11 kann erforderlich sein für die Produktion von karbonisierten Produkten zur Kühlung eines Füllerkessels. Optional kann das Sterilwasser den Kühler 11 auch ohne eine stattfindende Kühlung durchlaufen. Nach dem Kühler 11 kann ein Druck von 3,5 bar vorliegen und das Sterilwasser kann einem oder mehreren Verbrauchern 12 zur Verwendung zugeführt werden.

Nicht benötigtes Sterilwasser, also z.B. solches Sterilwasser, welches beispielsweise keinem Verbraucher zugeführt wird, kann über den Bypass 10 durch das Druckhalteventil 5 zurück zu und durch den Erhitzer 6 geleitet werden. Im gleichen Maße wie Sterilwasser durch die Verbraucher 12 verbraucht wird, kann Prozesswasser dem Heizkreislauf zugeführt werden, um neues Sterilwasser herzustellen und bereitzustellen.

Im Anschluss an eine dem oder den mehreren Verbrauchern 12 nachfolgende Leitung 13 ist eine Dampfsperre 23 vorgesehen, die ein Ventil 24, ein Gullyventil 25 und ein Sitzventil 26 umfasst.

Der Dampf für den Erhitzer 6 kann durch einen zweiten Einlass 14 eingebracht, beispielsweise mit 9 bar, und zu und durch den Erhitzer 6 geleitet werden. Im Erhitzer 6 kann er im Gegenstrom Wärme an das vorerwärmte Prozesswasser abgeben. Über einen ersten Auslass 15 kann der kondensierte Dampf als Kondensat ausgebracht werden, beispielsweise mit weniger als 2 bar.

Das Eiswasser oder anderweitiges Kühlwasser, z.B. Kühlturmwasser, für den Kühler 11 kann durch einen dritten Einlass 16 eingebracht werden und zu und durch den Kühler 11 geleitet werden. Beispielsweise kann das Eiswasser oder anderweitiges Kühlwasser, z.B. Kühlturmwasser, eine Temperatur von weniger als 5°C und eine Rate von 25 m³/h aufweisen. Im Kühler 11 kann das Eiswasser oder anderweitiges Kühlwasser, z.B. Kühlturmwasser, im Gegenstrom Wärme von dem erhitzten Sterilwasser aufnehmen. Das im Kühler 11 erwärmte Eiswasser oder anderweitiges Kühlwasser, z.B. Kühlturmwasser, kann über einen zweiten Auslass 17 ausgebracht werden.

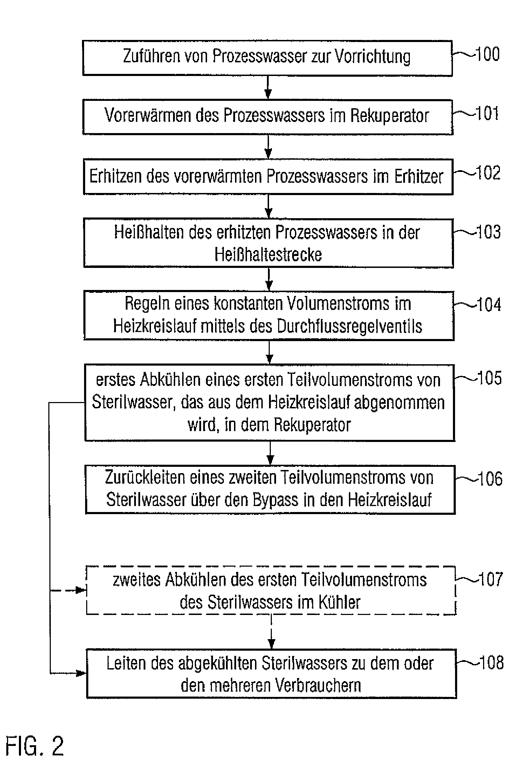

Die Figur 2 zeigt ein Flussdiagramm eines Verfahrens zum Betreiben der Vorrichtung zur Herstellung von Sterilwasser.

Im Schritt 100 erfolgt ein Zuführen von Prozesswasser zu der Vorrichtung.

Danach erfolgt im Schritt 101 ein Vorerwärmen des Prozesswassers im Rekuperator.

Dann erfolgt im Schritt 102 ein Erhitzen des vorerwärmten Prozesswassers im Erhitzer.

Anschließend erfolgt im Schritt 103 ein Heißhalten des erhitzen Prozesswassers in der Heißhaltestrecke für eine vorgegebene Zeitdauer mit einer vorgegebenen Temperatur. So kann das Sterilwasser hergestellt werden.

Im Schritt 104 erfolgt ein Regeln eines konstanten Volumenstroms in einem Heizkreislauf der Vorrichtung mittels eines Durchflussregelventils der Vorrichtung, um eine Heißhaltezeit im Heizkreislauf konstant zu halten. Das Regeln des konstanten Volumenstroms im Heizkreislauf kann während des gesamten Verfahrens zum Betreiben der Vorrichtung zur Herstellung von Sterilwasser erfolgen.

Im Schritt 105 erfolgt ein erstes Abkühlen eines ersten Teilvolumenstroms von Sterilwasser, das aus dem Heizkreislauf abgenommen wird, in dem Rekuperator. Dieser Schritt 105 kann erfolgen, nachdem Sterilwasser hergestellt wurde und beispielsweise der erste Teilvolumenstrom durch einen/mehrere Verbraucher aus dem Heizkreislauf angenommen wird.

Im Schritt 106 erfolgt ein Zurückleiten eines zweiten Teilvolumenstroms von Sterilwasser, der einer Differenz zwischen dem Volumenstrom und dem ersten Teilvolumenstrom entspricht, über einen Bypass der Vorrichtung in den Heizkreislauf.

Optional kann im Schritt 107 nach dem ersten Abkühlen ein zweites Abkühlen des ersten Teilvolumenstroms des Sterilwassers im Kühler erfolgen. Anschließend an das erste Abkühlen oder anschließend an das erste und zweite Abkühlen erfolgt im Schritt 108 ein Leiten des abgekühlten Sterilwassers zu dem oder den mehreren Verbrauchern.

## Patentansprüche

1. Vorrichtung (1) zur Herstellung und Bereitstellung von Sterilwasser umfassend:
- einen Einlass (2) für Prozesswasser,
- einen dem Einlass (2) nachfolgenden Rekuperator (3) zur Vorerwämung von Prozesswasser mittels im Gegenstrom fließenden Sterilwassers und zum Abkühlen des Sterilwassers mittels des im Gegenstrom fließenden Prozesswassers,
- einen dem Rekuperator (3) nachfolgenden Heizkreislauf mit einer Pumpe (4), einem Erhitzer (6) zum Erhitzen von vorerwärmten Prozesswasser und einer Heißhaltestrecke (7) zum Heißhalten von erhitztem Prozesswasser für eine vorgegebene Zeitdauer mit einer vorgegebenen Temperatur zur Herstellung von Sterilwasser,
**gekennzeichnet durch**
- einen der Heißhaltestrecke (7) nachfolgenden Temperatursensor (8) zum Messen einer aktuellen Temperatur des die Heißhaltestrecke (7) verlassenden Sterilwassers,
- ein dem Temperatursensor (8) nachfolgendes Durchflussregelventil (9),
- einen Bypass (10), der zwischen dem Durchflussregelventil (9) und dem Erhitzer (6) vorgesehen ist,
wobei das Durchflussregelventil (9) ausgebildet ist, einen Volumenstrom in dem Heizkreislauf konstant zu halten, wobei der Rekuperator (3) ausgebildet ist, bei Abnahme eines ersten Teilvolumenstroms von Sterilwasser aus dem Heizkreislauf, das Sterilwasser des ersten Teilvolumenstroms abzukühlen, wobei der Bypass (10) ausgebildet ist, einen zweiten Teilvolumenstrom von Sterilwasser, der einer Differenz zwischen dem Volumenstrom und dem ersten Teilvolumenstrom entspricht, in den Heizkreislauf zurückzuleiten, wodurch ein Abkühlen des Sterilwassers des zweiten Teilvolumenstroms vermieden wird,
wobei der Heizkreislauf ohne Rekuperations- oder Kühlstufe aufgebaut ist.

2. Die Vorrichtung nach Anspruch 1 weiter umfassend einen dem Rekuperator (3) nachfolgenden Kühler (11) zum weiteren Abkühlen von Sterilwasser.

3. Die Vorrichtung nach Anspruch 1 oder 2 weiter umfassend einen oder mehrere Verbraucher (12) zum Verbrauchen von abgekühltem Sterilwasser.

4. Die Vorrichtung nach Anspruch 3 weiter umfassend eine dem oder den Verbrauchern (12) nachfolgende Leitung (13), die für eine Leitungssanitisierung geöffnet werden kann.

5. Die Vorrichtung nach Anspruch 4, wobei in der Leitung (13) eine endständige Dampfsperre (23) vorgesehen ist.

6. Die Vorrichtung nach einem der Ansprüche 1 bis 5, wobei der Pumpe (4) nachfolgend und vor dem Erhitzer (6) ein Überströmventil (21) vorgesehen ist.

7. Die Vorrichtung nach einem der Ansprüche 1 bis 6, wobei in dem Bypass (10) ein Druckhalteventil (5) vorgesehen ist.

8. Die Vorrichtung nach einem der Ansprüche 1 bis 7, wobei der Heizkreislauf weiter ein Entgasungs- und Ausdehnungsgefäß (18) umfasst.

9. Verfahren zum Betreiben einer Vorrichtung (1) nach einem der Ansprüche 1 bis 8, wobei das Verfahren die folgenden Schritte umfasst:
- Zuführen (100) von Prozesswasser zu der Vorrichtung (1) durch einen Einlass (2) der Vorrichtung (1),
- Vorerwärmen (101) des Prozesswassers in einem Rekuperator (3) der Vorrichtung (1) mittels im Gegenstrom fließenden Sterilwassers,
- Erhitzen (102) des vorerwärmten Prozesswassers in einem Erhitzer (6) der Vorrichtung (1),
- Heißhalten (103) des erhitzen Prozesswassers in einer Heißhaltestrecke (7) der Vorrichtung (1) für eine vorgegebene Zeitdauer mit einer vorgegebenen Temperatur,
- Regeln (104) eines konstanten Volumenstroms in einem Heizkreislauf der Vorrichtung (1) mittels eines Durchflussregelventils (9) der Vorrichtung (1), um eine Heißhaltezeit im Heizkreislauf konstant zu halten,
- erstes Abkühlen (105) eines ersten Teilvolumenstroms von Sterilwasser, das aus dem Heizkreislauf abgenommen wird, in dem Rekuperator (3) und
- Zurückleiten (106) eines zweiten Teilvolumenstroms von Sterilwasser, der einer Differenz zwischen dem Volumenstrom und dem ersten Teilvolumenstrom entspricht, über einen Bypass (10) der Vorrichtung (1) in den Heizkreislauf.

10. Das Verfahren nach Anspruch 9, weiter umfassend den Schritt:
- zweites Abkühlen (107) des Sterilwassers in einem Kühler (11) der Vorrichtung (1).

11. Das Verfahren nach Anspruch 9 oder 10, weiter umfassend den Schritt:
- Leiten (108) des abgekühlten Sterilwassers zu einem oder mehreren Verbrauchern (12).

12. Das Verfahren nach einem der Ansprüche 9 bis 11, wobei bei dem Druckhalteventil (5) ein Druckunterschied von 0,5 bar vorgesehen ist.

13. Das Verfahren nach einem der Ansprüche 9 bis 12, wobei nach dem Durchflussregelventil (9) ein Druck von 3,5 bar bei einer Abnahme von Sterilwasser oder ein Druck von 4,0 bar ohne eine Abnahme von Sterilwasser vorgesehen ist.

## Claims

1. Device (1) for producing and providing sterile water, comprising:
- an inlet (2) for process water,
- a recuperator (3) located downstream of the inlet (2) for preheating of process water by sterile water flowing in countercurrent and for cooling down the sterile water by the process water flowing in countercurrent,
- a heating circuit located downstream of the recuperator (3) with a pump (4), a heater (6) for heating of preheated process water and a heat retention section (7) for keeping heated process water hot for a predetermined period of time at a predetermined temperature for producing sterile water,
**characterised by**
- a temperature sensor (8) located downstream of the heat retention section for measuring a current temperature of the sterile water leaving the heat retention section (7),
- a flow control valve (9) located downstream of the temperature sensor (8),
- a bypass (10) provided between the flow control valve (9) and the heater (6),
wherein the flow control valve (9) is configured to keep a volume flow in the heating circuit constant, wherein the recuperator (3) is configured to cool down the sterile water of a first partial volume flow when the first partial volume flow of sterile water is taken from the heating circuit, wherein the bypass (10) is configured, to return into the heating circuit a second partial volume flow of sterile water, wherein the second partial volume flow corresponds to a difference between the volume flow and the first partial volume flow, thereby preventing a cooling down of the sterile water of the second partial volume flow,
wherein the heating circuit has no recuperation or cooling stage.

2. The device of claim 1, further comprising a cooler (11) located downstream of the recuperator (3) for further cooling down the sterile water.

3. The device of claim 1 or 2, further comprising one or a plurality of consumers (12) for consuming cooled down sterile water.

4. The device of claim 3, further comprising a line (13) located downstream of the one or the plurality of consumers (12) that can be opened for line sanitisation.

5. The device of claim 4, wherein in the line (13) a terminal vapor barrier (23) is provided.

6. The device according to one of claims 1 to 5, wherein an overflow valve (21) is located downstream of the pump (4) and upstream of the heater (6).

7. The device according to one of claims 1 to 6, wherein a pressure holding valve (5) is provided in the bypass (10).

8. The device according to one of claims 1 to 7, wherein the heating circuit further comprises a degassing and expansion vessel (18).

9. Method for operating a device (1) according to one of claims 1 to 8, wherein the method comprises the following steps:
- feeding (100) process water to the device (1) through an inlet (2) of the device (1),
- preheating (101) the process water in a recuperator (3) of the device (1) by sterile water flowing in countercurrent,
- heating (102) the preheated process water in a heater (6) of the device (1),
- keeping hot (103) the heated process water in a heat retention section (7) of the device (1) for a predetermined period of time at a predetermined temperature,
- controlling (104) a constant volume flow in a heating circuit of the device (1) by a flow control valve (9) of the device (1), so as to keep a hot holding time in the heating circuit constant,
- first cooling down (105) a first partial volume flow of sterile water, which is taken from the heating circuit, in the recuperator (3) and
- returning (106) a second partial volume flow of sterile water into the heating circuit via a bypass (10) of the device (1) wherein the second partial volume flow of sterile water corresponds to a difference between the volume flow and the first partial volume flow.

10. The method of claim 9, further comprising the step of:
- second cooling down (107) the sterile water in a cooler (11) of the device (1).

11. The method of claim 9 or 10, further comprising the step of:
- conducting (108) the cooled down sterile water to one or a plurality of consumers (12).

12. The method according to one of claims 9 to 11, wherein a pressure difference of 0.5 bar is provided across a pressure holding valve (5).

13. The method according to one of claims 9 to 12, wherein downstream of the flow control valve (9), a pressure of 3.5 bar is provided in case sterile water is drawn off, or a pressure of 4.0 bar in case no sterile water is drawn off.

## Revendications

1. Dispositif (1) pour la fabrication et la fourniture d'eau stérile comprenant :
- une entrée (2) pour l'eau de traitement,
- un récupérateur (3) en aval de l'entrée (2) pour préchauffer l'eau de traitement au moyen d'eau stérile s'écoulant à contre-courant et pour refroidir l'eau stérile au moyen de l'eau de traitement s'écoulant à contre-courant,
- un circuit de chauffage en aval du récupérateur (3) avec une pompe (4), un réchauffeur (6) pour chauffer de l'eau de traitement préchauffée et une section de maintien en température (7) pour maintenir en température l'eau de traitement chauffée pendant une durée prédéterminée à une température prédéterminée pour produire de l'eau stérile,
**caractérisé par**
- un capteur de température (8) en aval de la section de maintien à chaud (7) pour mesurer une température actuelle de l'eau stérile quittant la section de maintien à chaud (7),
- une vanne de régulation du débit (9) située en aval du capteur de température (8),
- une dérivation (10) prévue entre la vanne de régulation de débit (9) et le réchauffeur (6),
la vanne de régulation de débit (9) étant conçue pour maintenir constant un débit volumique dans le circuit de chauffage, le récupérateur (3) étant conçu pour refroidir l'eau stérile du premier débit volumique partiel lorsqu'un premier débit volumique partiel d'eau stérile est prélevé du circuit de chauffage, la dérivation (10) étant conçue pour renvoyer dans le circuit de chauffage un deuxième flux volumique partiel d'eau stérile, qui correspond à une différence entre le flux volumique et le premier flux volumique partiel, ce qui permet d'éviter un refroidissement de l'eau stérile du deuxième flux volumique partiel,
le circuit de chauffage étant construit sans étage de récupération ou de refroidissement.

2. Dispositif selon la revendication 1, comprenant en outre un refroidisseur (11) en aval du récupérateur (3) pour refroidir davantage l'eau stérile.

3. Dispositif selon les revendications 1 ou 2, comprenant en outre un ou plusieurs consommateurs (12) pour consommer de l'eau stérile refroidie.

4. Dispositif selon la revendication 3, comprenant en outre une conduite (13) en aval du ou des consommateurs (12), qui peut être ouverte pour un assainissement de la conduite.

5. Dispositif selon la revendication 4, dans lequel un pare-vapeur terminal (23) est prévu dans la conduite (13).

6. Dispositif selon l'une des revendications 1 à 5, dans lequel une vanne de décharge (21) est prévue en aval de la pompe (4) et en amont du réchauffeur (6).

7. Dispositif selon l'une des revendications 1 à 6, dans lequel une vanne de maintien de pression (5) est prévue dans la dérivation (10).

8. Dispositif selon l'une des revendications 1 à 7, dans lequel le circuit de chauffage comprend en outre un vase de dégazage et d'expansion (18).

9. Procédé de fonctionnement d'un dispositif (1) selon l'une quelconque des revendications 1 à 8, ledit procédé comprenant les étapes suivantes :
- l'alimentation (100) du dispositif (1) en eau de traitement par une entrée (2) du dispositif (1),
- préchauffage (101) de l'eau de traitement dans un récupérateur (3) du dispositif (1) au moyen d'eau stérile s'écoulant à contre-courant,
- chauffer (102) l'eau de traitement préchauffée dans un réchauffeur (6) du dispositif (1),
- le maintien à chaud (103) de l'eau de traitement chauffée dans une section de maintien à chaud (7) du dispositif (1) pendant une période de temps prédéterminée à une température prédéterminée,
- la régulation (104) d'un débit volumique constant dans un circuit de chauffage du dispositif (1) au moyen d'une vanne de régulation de débit (9) du dispositif (1) afin de maintenir constant un temps de maintien à chaud dans le circuit de chauffage,
- un premier refroidissement (105) dans le récupérateur (3) d'un premier flux volumique partiel d'eau stérile prélevé sur du circuit de chauffage, et
- le renvoi (106) d'un deuxième débit volumique partiel d'eau stérile, qui correspond à une différence entre le débit volumique et le premier débit volumique partiel, dans le circuit de chauffage par l'intermédiaire d'une dérivation (10) du dispositif (1).

10. Procédé selon la revendication 9, comprenant en outre :
- un deuxième refroidissement (107) de l'eau stérile dans un refroidisseur (11) du dispositif (1).

11. Procédé selon les revendications 9 ou 10, comprenant en :
- l'acheminement (108) de l'eau stérile refroidie vers un ou plusieurs consommateurs (12).

12. Procédé selon l'une quelconque des revendications 9 à 11, dans lequel une différence de pression de 0,5 bar est prévue au niveau de la vanne de maintien de pression (5).

13. Procédé selon l'une des revendications 9 à 12, dans lequel on prévoit en aval de la vanne de régulation de débit (9) une pression de 3,5 bars avec un prélèvement d'eau stérile ou une pression de 4,0 bars sans prélèvement d'eau stérile.
